# EUROPÄISCHE PATENTSCHRIFT

(11) **EP 1 429 885 B1**
(45) Veröffentlichungstag und Bekanntmachung des Hinweises auf die Patenterteilung: **22.11.2006**
(21) Anmeldenummer: 02779391.8
(22) Anmeldetag: 20.09.2002
(51) Int. Cl.: B23K 15/00, B23K 15/04, B23K 15/06, B23K 20/14, B23K 26/12, C23C 14/34

(54) **WERKSTÜCKZUFUHRVORRICHTUNG FÜR EINE ELEKTRONENSTRAHLBEARBEITUNGSVORRICHTUNG**
WORKPIECE FEEDER DEVICE FOR AN ELECTRON BEAM PROCESSING DEVICE
DISPOSITIF D'ALIMENTATION EN PIECES POUR DISPOSITIF D'USINAGE PAR FAISCEAU ELECTRONIQUE

(30) Priorität: 24.09.2001 DE 10146838
(43) Veröffentlichungstag der Anmeldung: 23.06.2004
(73) Patentinhaber: PTR Präzisionstechnik GmbH, 63477 Maintal (DE)
(72) Erfinder: KLOSS, Ingo PTR Präzisionstechnik GmbH, 63477 Maintal (DE)
(74) Vertreter: Kramer - Barske - Schmidtchen
(86) Internationale Anmeldenummer: PCT/EP2002/010584
(87) Internationale Veröffentlichungsnummer: WO 2003/028938

(56) Entgegenhaltungen:
- EP-A- 0 389 820
- EP-A- 0 443 049
- EP-A- 0 443 149
- EP-A- 0 449 227
- DE-A- 19 812 670
- FR-A- 1 404 827
- US-A- 4 355 937
- US-B1- 6 203 677

## Beschreibung

Die vorliegende Erfindung bezieht sich auf eine Werkstückzufuhrvorrichtung für eine Elektronenstrahlbearbeitungsvorrichtung.

Die Elektronenstrahlbearbeitung und insbesondere das Elektronenstrahlschweißen, auch für mittlere und kleinere Werkstücke, findet eine immer weitere Verbreitung.

Das Elektronenstrahlschweißen (= EB-Schweißen; EB = Electron Beam) hat insbesondere hinsichtlich der Präzision des Energieeintrags beim Schweißen erhebliche Vorteile gegenüber anderen Schweißtechnologien, was in einem nahezu verzugsfreien und maßhaltigen Schweißprozeß resultiert. Daher werden insbesondere Werkstücke, bei denen ein Schweißvorgang so verzugsfrei und maßhaltig wie möglich auszuführen ist, wie zum Beispiel Getriebezahnräder oder Teile für Schalt- und Automatikgetriebe, vorzugsweise durch Elektronenstrahlschweißen geschweißt.

Beim Elektronenstrahlschweißen unterscheidet man zwischen dem Schweißen bei Normaldruck oder unter kaum reduziertem Normaldruck, dem sogenannten Non-Vac-Schweißen, und dem Schweißen im Vakuum (genauer bei einem reduzierten Druck von ≤ 10⁻² mbar = Halbvakuum bzw. ≤ 10⁻⁴ mbar = Hochvakuum). Das Elektronenstrahlschweißen im Vakuum hat den Vorteil des "sauberen" Prozesses, d.h. einer im wesentlichen kontaminationsfreien Umgebung und im wesentlichen konstanter Prozeßparameter, wie Druck, Temperatur, Feuchtigkeit, etc.

Die Fertigung von Werkstücken in der Kleinserienfertigung bzw. Serienfertigung mit Vakuum-Elektronenstrahlschweißen erfordert das Zuführen der Werkstücke in die Vakuumumgebung (Be- und Entladen) und das Bearbeiten in der Vakuumumgebung. Bisherige Vakuumschweißanlagen haben dazu entweder für jedes einzelne Werkstück oder für eine Charge von mehreren Werkstücken die Vakuumkammer auf Normaldruck geflutet, dann das Be- und Entladen der unbearbeiteten und bearbeiteten Werkstücke vorgenommen, und dann die Vakuumkammer wieder evakuiert.

Aus der DE 197 29 083 C1 ist eine Vorrichtung zum Elektronenstrahlschweißen bekannt, bei der mehrere Werkstücke auf einer Wechselpalette gehalten und quasi gleichzeitig mit einem Elektronenstrahl geschweißt werden. Mehrere dieser Wechselpaletten sind auf einer Wechselplatte angeordnet, die zugleich als Dichtungsflansch einer Bearbeitungskammer zur Elektronenstrahlbearbeitung ausgebildet ist. Diese Bearbeitungskammer (Vakuumkammer) wird bei jedem Werkstückwechsel geflutet.

Aus der CH 426 025 ist eine Elektronenstrahlbearbeitungsvorrichtung bekannt, bei der eine Elektronenstrahlkanone in einer Vakuumkammer angeordnet ist. Bei der in der CH 426 025 in Fig. 1 und 2 gezeigten Ausführungsform weist die Vakuumkammer zwei Öffnungen auf, an denen jeweils eine Schleusenvorrichtung mit einer zugeordneten Werkstückhaltevorrichtung vorgesehen ist. Wenn das Werkstück gewechselt wird, ist die Schleusenvorrichtung gegenüber der Vakuumkammer abgedichtet, und die Werkstückhaltevorrichtung befindet sich außerhalb der Schleuse. Zum Bearbeiten wird das Werkstück mit der Werkstückhaltevorrichtung in die Schleuse eingefahren, und die Schleuse wird durch eine Dichtungsvorrichtung, die mit der Werkstückhaltevorrichtung verbunden ist, abgedichtet. Dann wird die Schleuse gegenüber der Vakuumkammer geöffnet, so daß das Werkstück, das sich in der Schleuse befindet, die nunmehr mit der Vakuumkammer verbunden ist, mit dem Elektronenstrahl bearbeitet werden kann. Die Elektronenstrahlkanone wird zur Bearbeitung zu den jeweiligen Schleusen gefahren.

Aus der US 3,731,052 und aus dem PATENT ABSTRACTS OF JAPAN zur JP 62-248583 A sind jeweils weitere Elektronenstrahlbearbeitungsvorrichtungen bekannt.

Aus der EP 0 790 330 B1 ist eine Vorrichtung zum Transport von Substraten, insbesondere von CD-Substraten, bekannt, bei der eine Vakuumkammer gegenüber einer Einschleuskammer mittels eines Tellers eines Substrataufnahmeteils abgedichtet wird. Wenn die Einschleuskammer gegenüber Normaldruck geschlossen ist, wird ein Substrat durch Absenken des Substrataufnahmeteils auf einem Drehteller abgelegt und an diesen übergeben, und dann durch den Drehteller an eine Bearbeitungsposition gebracht.

Diese bisherige Technik resultiert in vergleichsweise hohen Taktzeiten und dem Problem der Kontaminierung der Vakuumkammer durch das regelmäßige Beaufschlagen mit Normaldruck.

Aus der US-Patenschrift mit der Veröffentlichungsnummer 4, 355, 937 oder der französischen Patentschrift mit der Veröffentlichungsnummer FR 1 404 827 ist jeweils eine Vorrichtung zum Bearbeiten eines Werkstücks mit einem Elektronenstrahl bekannt, die eine Elektronenstrahlkanone und eine Werkstückzufuhrvorrichtung mit einer Vakuumkammer aufweist.

Aus der EP 0 443 049 A1 ist eine Sputtervorrichtung zum Beschichten von Scheiben wie CD-Rohlingen bekannt. Die zu beschichtenden Rohlinge werden in die Sputtervorrichtung über eine separate Schleusenvorrichtung ein- und ausgeschleust, wobei Unterlageplatten sowohl zum Ablegen und Halten der Rohlinge als auch zum Schließen der Schleusenvorrichtung verwendet werden. Diese Ablageplatten werden durch Hubvorrichtungen von Dreharmen angehoben und auf diesen abgesenkt.

Es ist eine Aufgabe der vorliegenden Erfindung, eine verbesserte Werkstückzufuhrvorrichtung für die Elektronenstrahlbearbeitung von Werkstücken anzugeben, die die obigen Nachteile wesentlich reduziert.

Diese Aufgabe wird gelöst durch eine Vorrichtung nach Anspruch 1.

Weiterbildungen der Erfindung sind in den Unteransprüchen angegeben.

Weitere Merkmale und Vorteile ergeben sich aus der Beschreibung von Ausführungsbeispielen anhand der Figuren:
- Fig. 1: zeigt eine Schnittansicht einer ersten Ausführungsform der Werkstückzufuhrvorrichtung, und
- Fig. 2: zeigt eine Draufsicht auf eine zweite Ausführungsform der Werkstückzufuhrvorrichtung.

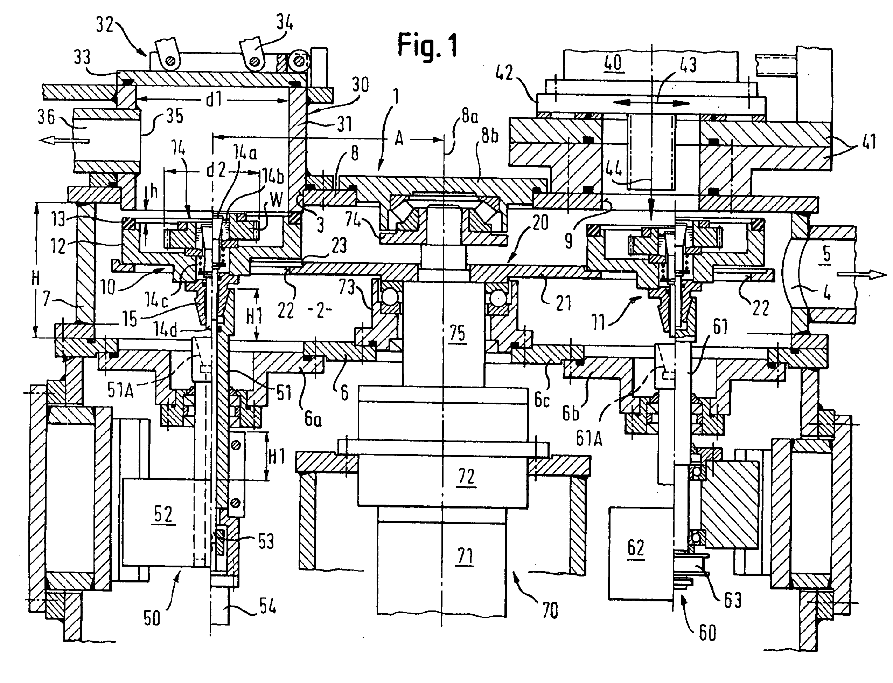

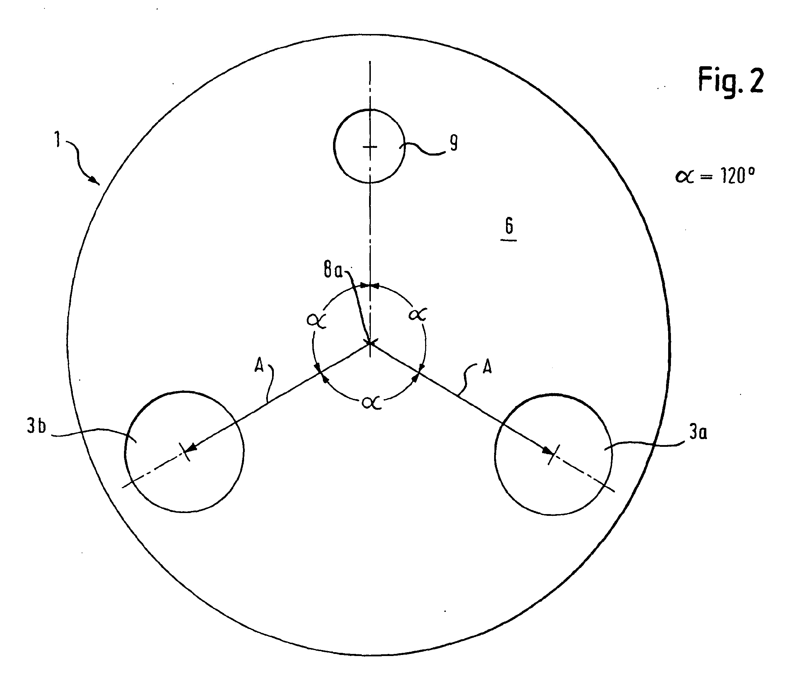

In Fig. 1 ist eine Querschnittsansicht der Werkstückzufuhrvorrichtung einer ersten Ausführungsform gezeigt. Die erste Ausführungsform weist eine Be-/Entladeöffnung und einen Anschluß für einen Elektronenstrahlgenerator auf, wie nachfolgend erläutert wird. Die zweite Ausführungsform, die in Fig. 2 in Draufsicht gezeigt ist, weist zwei Be-/Entladeöffnungen und einen Anschluß für einen Elektronenstrahlgenerator auf. Grundsätzlich ist die Zahl der Be-/Entladeöffnungen und der Anschlüsse für Elektronenstrahlgeneratoren nicht auf die gezeigten Beispiele begrenzt.

Es wird nun die erste Ausführungsform beschrieben. In Fig. 1 ist eine Vakuumkammer 1 gezeigt. Der Innenraum 2 der Vakuumkammer weist eine Be-/Entladeöffnung 3 und eine Evakuierungsöffnung 4 auf. In der Vakuumkammer 1 sind zwei Werkstückhaltevorrichtungen 10, 11 und eine Werkstückhalterbewegungsvorrichtung 20 angeordnet. Auf der Be-/Entladeöffnung 3 sitzt eine Werkstückschleusenvorrichtung 30. Die Evakuierungsöffnung 4 ist über eine Rohrleitung 5 mit einer Pumpstation (nicht gezeigt) verbunden.

Bei der ersten Ausführungsform ist die Vakuumkammer 1 im wesentlichen mit einem kreisförmigen Querschnitt (wie bei der zweiten Ausführungsform; siehe Fig. 2) und einer Höhe H ausgebildet.

Bei der in Fig. 1 gezeigten Ausführungsform ist die Vakuumkammer 1 mit einer Bodenplatte 6, die drei Öffnungen zum Anschließen von später zu beschreibenden Hub- und Drehvorrichtungen aufweist, einer den kreisförmigen Innenraum begrenzenden Seitenwand 7, und einer den Innenraum 2 nach oben begrenzenden Deckenplatte 8 ausgebildet. Die Deckenplatte 8 weist die Be-/Entladeöffnung 3, die ebenfalls kreisförmig ist, eine Öffnung zur Aufnahme eines Lagers einer Drehvorrichtung, wie später beschrieben wird, und eine Anschlußöffnung 9 für einen Elektronenstrahlgenerator 40 auf. Der Elektronenstrahlgenerator 40 ist in bekannter Weise druckdicht über einen Flansch 41 mit der Vakuumkammer 1 durch die Öffnung 9 verbunden. Der Elektronenstrahlgenerator 40 ist mittels einer Verschiebevorrichtung 42 in bekannter Weise seitlich über der Öffnung 9 (siehe den Pfeil 43) zur Einstellung des Bearbeitungsbereichs des Elektronenstrahls verschiebbar. Die Elektronenstrahlachse ist in Fig. 1 durch den Pfeil 44 angedeutet.

Auf bzw. in die Öffnung 3 ist die Werkstückschleusenvorrichtung 30 gesetzt. Die Werkstückschleusenvorrichtung 30 ist bevorzugterweise als ein Hohlzylinder 31 ausgebildet, an dessen Oberseite eine Schleuse 32 angebracht ist. Die Schleuse 32 weist einen Deckel 33 auf, der mittels eines Stellgliedes 34 zum Öffnen und Schließen der oberen Öffnung des Zylinders 31 bewegbar ist. Der Zylinder 31 weist eine seitliche Öffnung 35 auf, die über eine Rohrleitung 36 mit einer Pumpstation verbunden ist. Die Unterseite des Zylinders ist über die Be-/Entladeöffnung 3 offen zu dem Innenraum 2 der Vakuumkammer 1. Dieses kann, wie bei der in Fig. 1 gezeigten Ausführungsform, durch Einsetzen des Zylinders in die Be-/Entladeöffnung 3, oder alternativ, durch Aufsetzen des Zylinders auf die Deckelplatte 8, und in beiden Fällen durch Abdichten der Verbindung erfolgen.

Bei der in Fig. 1 gezeigten Ausführungsform sind die Be-/Entladeöffnung 3 und die Anschlußöffnung 9 relativ zu der Mittenachse 8a der Deckelplatte 8 um 180° versetzt angeordnet.

In einer Position der Bodenplatte 6, die senkrecht unterhalb der Be-/Entladeöffnung 3 liegt, ist ebenfalls eine Öffnung vorgesehen, die mittels eines Flansches 6a druckdicht verschlossen ist. Der Flansch 6a ist zur druckdichten Durchführung einer Hubstange 51 einer Hubvorrichtung 50 vorgesehen, wie später erläutert wird.

In einer im wesentlichen senkrecht unter der Anschlußöffnung 9 gelegenen Position der Bodenplatte 6 ist eine Öffnung vorgesehen, die mittels eines Anschlußflansches 6b druckdicht verschlossen ist. Der Anschlußflansch 6b dient zum druckdichten Durchführen einer Hub- und Drehstange 61 einer Hub- und Drehvorrichtung 60.

In einer Position um den Durchtrittspunkt ihrer Mittenachse 8a ist in der Bodenplatte 6 eine weitere Öffnung vorgesehen, die mittels eines Flansches 6c zum Halten eines Lagers 73 einer Drehvorrichtung 70 vorgesehen ist. Die Drehvorrichtung 70 ist bei der gezeigten Ausführungsform als Motor 71 mit Schaltgetriebe 72 ausgebildet. Die entsprechende Öffnung in der Deckelplatte ist mittels eines Flansches 8b zum Halten eines Lagers 74 der Drehvorrichtung 70 druckdicht verschlossen. Die Lager 73 und 74 lagern eine Ausgabewelle 75, die mittels eines Motors 71 über ein Getriebe 72 zur Drehung antreibbar ist. Die Ausgabewelle 75 ist dabei so angeordnet, daß ihre Drehachse mit der Mittenachse 8a zusammenfällt.

An der Ausgabewelle 75 ist eine Drehhalterung 21 der Bewegungsvorrichtung 20 derart befestigt, daß sie in einer zu der Mittenachse 8a senkrechten Ebene um die Mittenachse 8a drehbar ist. Die Drehhalterung 21 kann als eine kreisförmige Platte, was zu einem relativ hohen Trägheitsmoment führt, oder aber auch mit sich linear erstreckenden Armen ausgebildet sein. Bei der in Fig. 1 gezeigten Ausführungsform weist die Drehhalterung 21 zwei runde Öffnungen 22 auf, die mit ihren Mittelpunkten im Abstand A von der Mittenachse 8a ausgebildet sind. Die Öffnungen 22 sind von kreisrunden Ausnehmungen 23 mit Fase an der der Deckelplatte 8 zugewandten Oberseite der Drehhalterung 21 umgeben, wobei die Ausnehmung 23 einen vorbestimmten Durchmesser aufweist. Der vorbestimmte Durchmesser der Ausnehmung 23 entspricht mit der notwendigen Toleranz dem Außendurchmesser der Bodenplatten 12 der Werkstückhaltevorrichtungen 10, 11, die später beschrieben werden.

Die Drehhalterung 21 ist mit der Ausgabewelle 75 an einer Stufe derselben durch Verschrauben fest verbunden. Das Lager 73 ist als Axiallager gebildet und im Flansch 6c gehalten. Die Ausgabewelle 75 weist eine weitere Stufe auf, auf der das Lager 74, das als Kegellager ausgebildet ist, aufliegt. Durch diese Ausbildung wird die Steifigkeit der Bodenplatte 6 und der Deckelplatte 8 gegen eine Durchbiegung aufgrund der durch die Druckdifferenzen wirkenden Kräfte jeweils stark erhöht. Eventuelle Abweichungen der Position des Elektronenstrahls auf dem Werkstück, die durch solche Durchbiegungen verursacht werden könnten, werden dadurch vermieden.

Die Mittelachse der Hubstange 51 und die Mittelachse der Hub- und Drehstange 61 sind ebenfalls jeweils mit dem Abstand A auf entgegengesetzten Seiten der Mittenachse 8a angeordnet.

Diese Anordnung führt dazu, daß die Öffnungen 22 der Drehhalterung 21, die in der gleichen Beziehung zur Mittenachse 8a angeordnet sind, mit ihren Mittelpunkten derart angeordnet werden können, daß die Mittelachsen der Hubstange 51 bzw. der Hub- und Drehstange 61 durch diese Mittelpunkte verlaufen, wie es in dem Schnitt in Fig. 1 gezeigt ist.

Die Hubstange 51 der Hubvorrichtung 50 ist mittels eines Hubzylinders 52 um den Hub H1 anhebbar und absenkbar, wie es in Fig. 1 gezeigt ist.

Die Hub- und Drehstange 61 der Hub- und Drehvorrichtung 60 ist mittels eines Hubzylinders 62 und eines Drehantriebs 63 um einen Hub, der dem Hub H1 entspricht, anhebbar und absenkbar, wie es ebenfalls in Fig. 1 angedeutet ist, und zusätzlich um die Mittelachse der Stange 61 drehbar.

Die Werkstückhaltevorrichtungen 10, 11 sind identisch ausgebildet, so daß im folgenden nur die Werkstückhaltevorrichtung 10 beschrieben wird. Die Werkstückhaltevorrichtung 10 besteht in einer bevorzugten Ausführungsform, wie sie in Fig. 1 gezeigt ist, aus einer Grundplatte 12, einer Dichtung 13, die an der Grundplatte 12 befestigt ist, einem Werkstückhalter 14 und einem Dom 15. Bei der bevorzugten Ausführungsform ist die Grundplatte 12 schüsselförmig ausgebildet, d.h. mit einem Boden und einer einen Innenraum begrenzenden Seitenwand. Die Dichtung 13 ist auf der Oberseite der Seitenwand angeordnet. Der Dorn 15 ist an der der Dichtung abgewandten Seite der Grundplatte 12 ausgebildet. Die Grundplatte 12 ist kreisförmig mit einem Außendurchmesser, der, wie bereits beschrieben, dem Innendurchmesser der Ausnehmung 23 entspricht. Dadurch kann die Werkstückhaltevorrichtung 10 in der Ausnehmung 23 auf der Drehhalterung 21 aufgenommen und zur Drehbewegung gehalten werden, wobei der Dom 15 durch die Öffnung 22 nach unten vorsteht. Der an der Unterseite der Grundplatte 12 mittig ausgebildete Dorn 15 weist im Querschnitt eine nach unten konische Form auf. Der Dom 15 weist mittig ein Durchgangsloch auf.

Mittig an der Oberseite der Grundplatte 12 ist der Werkstückhalter 14 angeordnet, der abhängig von dem zu haltenden Werkstück W ausgebildet ist.

Bei der in Fig. 1 gezeigten Ausführungsform ist das Werkstück W ein zu schweißendes Getriebezahnrad. Ein solches Getriebezahnrad weist ein Durchgangsloch auf. Zum Halten von Werkstücken mit solchen Durchgangslöchern ist der Werkstückhalter 14 wie folgt als eine sogenannte Spannzange ausgebildet. Ein Konusstück 14a ist an der Oberseite eines Stabes 14d, der in dem Durchgangsloch des Domes 15 gleitend verschiebbar gelagert ist, angeordnet. Die Konusform verjüngt sich in Richtung der Unterseite der Werkstückhaltevorrichtung 10. Die Kombination aus Konusstück 14a und Stab 14d wird durch eine Feder 14c in Richtung der Unterseite der Werkstückhaltevorrichtung 10 vorgespannt. Um das Konusstück 14a ist ein elastisch deformierbarer Ring 14b, z.B. ein Metallring mit einer Mehrzahl von Schlitzen, die von einer Seite des Rings axial bis zu einer vorbestimmten Tiefe verlaufen und eine radiale Auslenkung der zwischen den Schlitzen befindlichen Ringabschnitte ermöglichen, gesetzt, dessen Außendurchmesser im entspannten Zustand leicht kleiner als der Innendurchmesser des Durchgangslochs des Werkstücks W ist. Der Durchgang des Stabes 14d durch den Dom 15 ist im wesentlichen druckdicht ausgebildet.

Durch diese Ausbildung kann durch eine Kraft von unten auf den und längs des Stabs 14d, bei festgehaltener Grundplatte 12, die Kombination aus Stab 14d und Konus 14a in Längsrichtung nach oben verschoben werden.

Bei der in Fig. 1 gezeigten Ausführungsform ist der zylinderförmige Innenraum der Werkstückschleusenvorrichtung 30 mit dem kreisförmigen Querschnitt mit dem Durchmesser dl ausgebildet. Die Seitenwand der Grundplatte 12 ist mit einem entsprechenden Durchmesser ausgebildet, so daß die auf der Oberseite der Seitenwand angebrachte Dichtung 13 einen Außendurchmesser aufweist, der größer als d1 ist.

Die Hubstange 51 und die Hub- und Drehstange 61 weisen jeweils an ihrer Oberseite einen Ansatz mit einer konusförmigen Innenausnehmung 51A, 61A auf. Die Konusform der Innenausnehmung ist an die Konusform des Ansatzes 15 angepaßt. In der Hubstange 51 ist längs deren Mittelachse eine Steuerstange 53 verschiebbar angeordnet, die durch eine Antriebsvorrichtung 54 verschiebbar ist.

Der Betrieb der in Fig. 1 gezeigten Ausführungsform, der durch eine nicht gezeigte Steuervorrichtung gesteuert wird, wird nun beschrieben.

Der Innenraum 2 der Vakuumkammer 1 wird über die Öffnung 4 evakuiert. Dabei ist die Be-/Entladeöffnung 3 mit der Werkstückhaltevorrichtung 10 abgedichtet, wie es in der Schnittdarstellung der Werkstückhaltevorrichtung 10 auf der rechten Seite des geteilten Schnittes auf der linken Seite der Fig. 1 dargestellt ist. Dabei ist die Hubstange 51 der Hubvorrichtung 50 um den Hub H1 angehoben. Dadurch ist der Dorn 15 in Eingriff mit der Innenausnehmung 51A. Die Werkstückhaltevorrichtung 10 wird um den Hub h nach oben angehoben (siehe den Vergleich der linken und rechten Seite des Schnittes der Werkstückhaltevorrichtung 10 auf der linken Seite der Fig. 1) und die Be-/Entladeöffnung 3 ist mittels der Dichtung 13 und des abgedichteten Durchgangs des Stabes 14d im Dorn 15 abgedichtet. Beim Anheben wird die Werkstückhaltevorrichtung 10 aus der Ausnehmung 23 der Drehhalterung 21 herausgehoben.

Der Steuerstab 53 wird durch die Antriebsvorrichtung 54 hochgefahren und drückt den Stab 14d nach oben gegen die Federkraft der Feder 14c. Dadurch wird keine nennenswerte Kraft auf den elastischen Ring 14b ausgeübt, so daß dessen Außendurchmesser kleiner als der Innendurchmesser des Durchgangslochs des Werkstücks W ist. Der Innenraum der Werkstückschleusenvorrichtung 30 wird auf Normaldruck geflutet. In diesem Zustand wird der Deckel 33 abgehoben und ein Werkstück W, wie zum Beispiel ein Getriebezahnrad, wird über den elastischen Ring 14b geschoben.

Dann wird der Deckel 33 geschlossen und der Innenraum über die Öffnung 35 und die Leitung 36 auf den Druck in den Innenraum 2 der Vakuumkammer 1 evakuiert. Nach dem Evakuieren wird die Hubstange 51 um den Hub H1 abgesenkt und der Steuerstab 53 wird zurückgezogen.

Durch das Zurückziehen des Steuerstabs 53 wird das Konusstück 14a durch die Kraft der Feder 14c in Richtung der Unterseite der Werkstückhaltevorrichtung 10 bewegt, so dass der elastische Ring 14b deformiert und gegen die Innenseite des Durchgangslochs des Werkstücks W gedrückt wird. Dieses wird dadurch gehalten. Weiterhin wird die Werkstückhaltevorrichtung 10 durch das Absenken der Hubstange 51 in der Ausnehmung 23 der Drehhalterung 21 abgesetzt. Dieser Zustand ist in dem zweigeteilten Schnitt der Werkstückhaltevorrichtung 10 auf der linken Seite der Fig. 1 zu sehen.

Da der Innenraum der Werkstückschleusenvorrichtung 30 auf den gleichen Druck wie der Innenraum 2 evakuiert wurde, gibt es keine Veränderung des Vakuumzustandes in dem Innenraum 2 durch das Absenken der Werkstückhaltevorrichtung 10.

Wenn durch den beschriebenen Vorgang das erste Werkstück W in die Vakuumkammer eingebracht wurde, so wird dieses nun durch Drehen der Drehhalterung 21 um 180° mittels der Drehvorrichtung 70 von der Be-/Entladeposition (linke Seite in Fig. 1) zu der Bearbeitungsposition (rechte Seite in Fig. 1) gebracht.

Dort wird die Hub- und Drehstange 61 nach oben angehoben. Da in der Fig. 1 die Werkstückhaltevorrichtung 11 auf der rechten Seite gezeigt ist, wird nunmehr der Vorgang unter Bezugnahme auf die Werkstückhaltevorrichtung 11 beschrieben.

Da der Stab 14d nicht hochgedrückt wird, bleibt das Werkstück W durch die Kraft der Feder 14c eingespannt.

Durch die einander angepaßten konischen Formen des Doms 15 und der Innenausnehmung der Hub- und Drehstange 61 wird eine Reibungskraft zwischen diesen erzielt, die zum Drehantrieb der Werkstückhaltevorrichtung 11 mit dem Werkstück W ausreicht.

Das Schweißen des Werkstückes W wird dann durch Drehen der Werkstückhaltevorrichtung 11 und/oder seitliches Verschieben der Strahlachse 44 entsprechend der vorgeschriebenen Bedingungen zum Bearbeiten des Werkstücks ausgeführt.

Gleichzeitig wird in der Be-/Entladeposition die Werkstückhaltevorrichtung 10 durch die Hubstange 51 erneut angehoben, so daß der zuvor beschriebene Vorgang zuerst durch Entladen eines bearbeiteten Werkstücks W, und dann durch Laden eines neu zu bearbeitenden Werkstücks W, erneut ausgeführt wird. Da die Vakuumkammer 2 durch das Hochdrücken der Werkstückhaltevorrichtung 10 abgedichtet ist, kann gleichzeitig die Bearbeitung in der Bearbeitungsposition im Vakuum ausgeführt werden.
Es ist offensichtlich, daß die drastische Reduzierung des zu flutenden und zu evakuierenden Volumens durch die Verwendung der Werkstückschleusenvorrichtung 30 bereits eine starke Verminderung der notwendigen Pumpzeiten erbringt. Zusätzlich kann gleichzeitig mit der Bearbeitung der Werkstückwechsel vorgenommen werden, was ebenfalls eine drastische Reduzierung der Taktzeiten ergibt.

Dieses wird insbesondere durch die Multifunktionalität der Werkstückhaltevorrichtungen 10, 11 erreicht, die gleichzeitig die Vakuumkammer 2 und die Werkstückschleusenvorrichtung 30 abdichten und das Werkstück halten und freigeben. Zusätzlich ermöglicht die Ausbildung auch noch das Bewegen des Werkstücks in der Bearbeitungsposition.

Die schüsselförmige Ausbildung der bevorzugten Ausführungsform der Werkstückhaltevorrichtung 10 hat einen besonderen Vorteil dahingehend, daß der zum Abdichten notwendige Bewegungshub stark reduziert wird. Wie in Fig. 1 offensichtlich ist, ist lediglich der Hub h notwendig, obwohl die Höhe des Werkstücks W, das in die Kammer einzubringen ist, wesentlich größer ist.

Wenn die Bearbeitungszeit des Werkstücks mit dem Elektronenstrahl trotzdem kleiner als die zum Werkstückwechsel notwendige Zeit ist, dann kann mit einer zweiten Be-/Entladeöffnung die zum Be- und Entladen notwendige Taktzeit weiter reduziert werden.

Eine vorteilhafte Ausführungsform mit zwei Be-/Entladeöffnungen ist im Schema in der Draufsicht in Fig. 2 gezeigt.

Bei der Ausführungsform aus Fig. 1 waren der Anschluß und die Be-/Entladeöffnung mit einer Teilung von 180° um die Mittenachse 8a (Drehachse der Werkstückbewegung) angeordnet. Bei der Ausführungsform in Fig. 2 sind zwei Be-/Entladeöffnungen 3a, 3b und ein Anschluß 9 mit einer Teilung von 120° (d.h. gleichmäßig verteilt um die Mittenachse 8a) angeordnet.

Mit dieser Ausbildung kann die zum Werkstückwechsel notwendige Taktzeit offensichtlich weiter reduziert werden, da kein Entladen und Beladen an der jeweiligen Position, sondern nur ein Entladen oder Beladen an der jeweiligen Position notwendig ist.

Das bedeutet, daß mit dem bloßen Vorsehen einer weiteren Werkstückwechselschleuse die Ausnutzung des Elektronenstrahlgenerators und der Vakuumkammer, die wesentlich teurer sind, verbessert werden kann.

Alternativ kann die Werkstückbewegungsvorrichtung natürlich anders ausgebildet werden. Dazu ist eine lineare Bewegung anstatt einer Drehbewegung denkbar. Der Anschluß für den Elektronenstrahlgenerator ist dann zwischen einer Entladeöffnung und einer Beladeöffnung angeordnet.

Es können auch, wie bereits eingangs ausgeführt, andere Anordnungen mit zwei oder mehr Elektronenstrahlerzeugern und ein oder zwei Be-/Entladeöffnungen pro Elektronenstrahlerzeuger verwendet werden.

In Fig. 1 ist nur eine vertikale Anordnung des Elektronenstrahlerzeugers gezeigt. Es ist natürlich auch möglicht, einen Elektronenstrahlerzeuger seitlich anzuordnen.

Die Ausführungsform aus Fig. 1 ist auf eine Minimierung des Hubs h gerichtet.

Bei einer noch bevorzugteren Ausführungsform ist die Dichtung 13 nicht an der multifunktionalen Werkstückhaltevorrichtung 10, 11, sondern an der Vakuumkammer 1 oder der die Be-/Entladeöffnung umgebenden unteren Begrenzung der Werkstückschleuse 30 vorgesehen. Diese Anordnung hat neben der Verminderung der Zahl der Dichtungen den erheblichen Vorteil, daß die Dichtung nicht in die Nähe des Elektronenstrahls kommt. Insbesondere in dem Fall, in dem die Dichtung aus isolierendem Material ausgebildet ist, würde das zur Gefahr von Überschlägen aufgrund elektrostatischer Aufladungen führen.

Wenn ein möglichst kleiner Hub h nicht so wichtig ist und mehr Wert auf eine weitere Verminderung der Kontamination des Innenraums 2 der Vakuumkammer gelegt wird, dann wird die Grundplatte nicht schlüsselförmig sondern flach ausgebildet, wodurch die Oberfläche, die beim Werkstückwechsel von außen kontaminiert werden kann, stark reduziert wird.

Nach einer bevorzugten Abwandlung der oben beschriebenen Ausführungsformen sind die Hubvorrichtung 50 und die Hub- und Drehvorrichtung 60, die dort zum Beispiel aus hydraulische Vorrichtungen ausgebildet sein können, jeweils durch eine entsprechende elektrische Vorrichtung ersetzt. Diese elektrische Hubvorrichtung und die elektrische Hub- und Drehvorrichtung sind in der Vakuumkammer angeordnet, und nicht wie bei der beschriebenen ersten Ausführungsform teilweise außerhalb. Nach einer weiteren bevorzugten Abwandlung stellen diese elektrischen Vorrichtungen je eine elektrische Achse eine CNC Maschine dar, bei der dann bevorzugterweise auch die Drehvorrichtung 70 als ein elektrischer Servo ausgebildet ist, der eine weitere elektrische Achse der CNC Maschine darstellt.

Nach einer weiteren bevorzugten Abwandlung der obigen Ausführungsformen wird für die Bearbeitung eines Werkstückes eine Bearbeitungskammer (oder Prozeßkammer) dadurch gebildet, daß eine in der Bearbeitungsposition (rechte Seite in Fig. 1) befindliche Werkstückhaltevorrichtung 11 soweit angehoben wird, daß ein gegenüber der übrigen Vakuumkammer 1 abgedichteter Raum durch den oberhalb der Öffnung 9 befindlichen Teil des Elektronenstrahlgenerators 40 und die Werkstückhaltevorrichtung 11 begrenzt wird. Dieses ist sowohl mit einer schüsselförmig ausgebildeten als auch mit einer flach ausgebildeten Werkstückhaltevorrichtung ohne weiteres möglich. Die Ausbildung einer solchen Bearbeitungskammer, die während der Bearbeitung des Werkstückes gegenüber der übrigen Vakuumkammer abgedichtet ist, hat den Vorteil, daß bei einer Elektronenstrahlbearbeitung entstehende Röntgenstrahlung am Austreten aus der Bearbeitungskammer gehindert wird, und daß beim Schweißen unvermeidlich entstehende Kontaminationen wie Schweißpartikel, Metalldampf u.ä. nicht in die übrige Vakuumkammer 1 gelangen können, sondern aus der Bearbeitungskammer abgesaugt werden.

Nach einer weiteren bevorzugten Abwandlung der oben beschriebenen Ausführungsformen und Abwandlungen wird die Verbindung zwischen den Werkstückhaltevorrichtungen 10, 11 und der Hubstange 51 bzw. der Hub- und Drehstange 61 anstelle eine konusförmigen Ansatzes 15 und entsprechender konusförmiger Innenausnehmungen 51A, 61A durch aneinander angepaßte Verzahnungen hergestellt, zum Beispiel durch eine sogenannte Hirt-Verzahnung. Eine solche Verzahnung ermöglicht ein lagerichtiges Übernehmen bzw. Positionieren von Werkstücken, bei denen die Orientierung für die Bearbeitung mittels des Elektronenstrahls wesentlich ist.

Bei der oben beschriebenen ersten Ausführungsform wird der Innenraum der Werkstückschleusenvorrichtung 30 auf den gleichen Druck wie der Innenraum 2 evakuiert. Nach einer weiteren Abwandlung ist es, wenn das Volumen des Innenraums 2 wesentlich größer als das Volumen des Innenraums der Werkstückschleusenvorrichtung 30 ist, zum Beispiel um den Faktor 5, 10, 20, 30 oder größer, bevorzugt, daß der Innenraum der Werkstückschleusenvorrichtung 30 nur ungefähr auf den gleichen Druck wie der Innenraum 2 evakuiert wird. Der ungefähr gleiche Druck bedeutet in diesem Zusammenhang, daß der Faktor, um den der Druck im Innenraum der Werkstückschleusenvorrichtung 30 höher liegen kann, um einen Faktor höher als der Druck des Innenraums 2 liegt, der kleiner als der entsprechende Faktor der Volumina ist, zum Beispiel 1/2 oder 1/4 oder 1/8 oder weniger dieses Faktors (d.h. ¼ x 5= 1,25).

Die oben beschriebenen Werkstückhaltevorrichtungen halten ein Werkstück. Nach einer weiteren Abwandlung kann mehr als ein Werkstück, zum Beispiel drei Werkstücke, in einer einzigen Werkstückhaltevorrichtung gehalten werden. Diese ist dann bevorzugterweise so ausgebildet, daß die einzelnen Werkstücke individuell, d.h. unabhängig von den anderen Werkstücken, die von derselben Werkstückhaltevorrichtung gehalten werden, gebracht werden können.

## Patentansprüche

1. Vorrichtung zum Bearbeiten eines Werkstückes mit einem Elektronenstrahl, mit
mindestens einer Elektronenstrahlkanone (40), und
einer Werkstückzufuhrvorrichtung, die vorgesehen ist mit
einer Vakuumkammer (1), die wenigstens einen Anschluß (9) für jede Elektronenstrahlkanone (40) und wenigstens eine Be-/Entladeöffnung (3; 3a, 3b) aufweist,
wenigstens zwei Werkstückhaltevorrichtungen (10, 11),
einer Bewegungsvorrichtung (20, 51, 61) zum Bewegen jeder der Werkstückhaltevorrichtungen (10, 11) zu einer entsprechenden Be-/Entladeposition an der wenigstens einen Be-/ Entladeöffnung (3; 3a, 3b) und einer Bearbeitungsposition an dem wenigstens einen Anschluß (9) für die Elektronenstrahlkanone (40), und
jeweils einer Werkstückschleusenvorrichtung (30) an jeder Be-/Entladeöffnung (3; 3a, 3b), die selektiv evakuiert oder mit Normaldruck beaufschlagbar ist und eine verschließbare Schleusenöffnung aufweist,
bei der die Werkstückhaltevorrichtungen (10, 11) und die Bewegungsvorrichtung (20, 51, 61) in der Vakuumkammer (1) angeordnet sind,
bei der die Werkstückhaltevorrichtungen (10, 11) zum druckdichten Verschließen der Be-/Entladeöffnung (3; 3a, 3b) ausgebildet und durch die Bewegungsvorrichtung (20, 51, 61) selektiv in eine Schließstellung bewegbar sind,
bei der jede der Werkzeughaltevorrichtungen (10, 11) eine Grundplatte (12) und einen Werkstückhalter (14) aufweist,
bei der eine Dichtung (13) an jeder Werkzeughaltevorrichtung oder an jeder Be-/Entladeöffnung angeordnet ist,
bei der jede der Werkstückhaltevorrichtungen zum Abdichten einer Bearbeitungskammer in der Bearbeitungsposition, die von dem Anschluss (9) für die Elektronenstrahlkanone (40), der Elektronenstrahlkanone (40) und der Werkstückhaltevorrichtung (11) begrenzt wird, ausgebildet ist, und
bei der die Bewegungsvorrichtung eine Hubvorrichtung (51, 61) zum Anheben und Absenken der Werkstückhaltevorrichtungen in der/den Be-/Entladeposition(en) und der/den Bearbeitungsposition(en) derart, daß die Werkstückhaltevorrichtungen beim Anheben aus einem Halter (21) der Bewegungsvorrichtung herausgehoben werden und beim Absenken in dem Halter (21) in der Bewegungsvorrichtung abgesetzt werden, aufweist.

2. Vorrichtung nach Anspruch 1,
**dadurch gekennzeichnet,**
**daß** die Dichtung an der Be-/Entladeöffnung (3; 3a; 3b) zum Zusammenwirken mit dem Rand der Grundplatte angeordnet ist.

3. Vorrichtung nach Anspruch 1 oder 2,
**dadurch gekennzeichnet,**
**daß** die Werkstückhaltevorrichtung einen Ansatz (15) an der der Hubvorrichtung zugewandten Seite aufweist, der in Eingriff mit der Hubvorrichtung bringbar ist.

4. Vorrichtung nach Anspruch 2 oder 3,
**dadurch gekennzeichnet,**
**daß** die Grundplatte (12) schüsselförmig ausgebildet ist, wobei der Werkzeughalter (14) zum Halten eines Werkstückes W innerhalb der Schüsselform ausgebildet ist.

5. Vorrichtung nach einem der Ansprüche 1 bis 4,
**dadurch gekennzeichnet,**
**daß** die Bewegungsvorrichtung (21, 70) zum Bewegen der Werkstückhaltevorrichtungen (10, 11) in einer Ebene zwischen den Be-/Entladepositionen und den Bearbeitungspositionen ausgebildet ist.

6. Vorrichtung nach Anspruch 5,
**dadurch gekennzeichnet,**
**daß** die Bewegungsvorrichtung (21, 70) einen Drehhalter (21) mit je einer Haltevorrichtung (22, 23) zum Halten je einer Werkstückhaltevorrichtung (10, 11) aufweist.

7. Vorrichtung nach einem der Ansprüche 2 bis 6,
**dadurch gekennzeichnet,**
**daß** die Dichtung (13) am Rand der Grundplatte (12) zum Zusammenwirken mit dem Rand der Be-/Entladeöffnung (3; 3a, 3b) angeordnet ist.

8. Vorrichtung nach einem der Ansprüche 1 bis 7,
**dadurch gekennzeichnet,**
**daß** der Innenraum der Werkstückschleusenvorrichtung (30), der selektiv evakuierbar oder mit Normaldruck beaufschlagbar ist, ein erstes Volumen aufweist,
**daß** die Vakuumkammer (1) einen Innenraum (2) mit einem zweiten Volumen aufweist, wobei das zweite Volumen um einen ersten Faktor größer als das zweite Volumen ist, und wobei die Vakuumkammer (1) dazu angepaßt ist, daß im Betrieb im Innenraum (2) ein erster Druck herrscht, und
**daß** die Werkstückschleusenvorrichtung (30) dazu angepaßt ist, daß sie selektiv auf einen zweiten Druck evakuiert wird, der um einen zweiten Faktor höher als der erste Druck ist, wobei der zweite Faktor kleiner als der erste Faktor ist.

## Claims

1. An apparatus for processing a workpiece by an electron beam, comprising
at least one electron beam gun (40), and
a workpiece supply device , which workpiece supply device comprises
a vacuum chamber (1) having at least one connector (9) for each electron beam gun (40) and at least one charging/discharging opening (3; 3a; 3b),
at least two workpiece holding devices (10, 11),
a moving device (20, 51, 61) for moving each of the workpiece holding devices (10, 11) to a corresponding charging/discharging position at the at least one charging/discharging opening (3; 3a; 3b) and to a processing position at the at least one connector (9) for the electron beam gun (40), and
one workpiece locking device (30) at each charging/discharging opening (3; 3a; 3b), which can be selectively evacuated or can admit normal pressure, and comprising a closable lock opening,
wherein the workpiece holding devices (10, 11) and the moving device (20, 51, 61) are arranged in the vacuum chamber (1),
wherein the workpiece holding devices (10, 11) are adapted for pressure sealed closing of the charging/discharging opening (3; 3a; 3b) and are selectively movable into a closing position by the moving device (20, 51, 61),
wherein each of the workpiece holding devices (10, 11) comprises a base plate (12) and a workpiece holder (14),
wherein a seal (13) is arranged on each workpiece holding device or at each charging/discharging opening,
wherein each of the workpiece holding devices is adapted for sealing a processing chamber in the processing position, which processing chamber is defined by the connector (9) for the electron beam gun (40), the electron beam gun (40) and the workpiece holding device (11), and
wherein the moving device comprises a lifting device (51, 61) for raising and lowering the workpiece holding devices in the charging/discharging position(s) and in the processing position(s) such that the workpiece holding devices, when being raised, are lifted out of a holder (21) of the moving device and, when being lowered, are set down in the holder of the moving device.

2. Apparatus according to claim 1, **characterized in that**
the seal is arranged at the charging/discharging opening (3; 3a, 3b) for cooperating with the edge of the base plate.

3. Apparatus according to claim 1 or 2, **characterized in that**
the workpiece holding device comprises a projection (15) at the side facing the lifting device, which projection can be brought into engagement with the lifting device.

4. Apparatus according to claim 2 or 3, **characterized in that**
the base plate (12) has a bowl-shaped form, wherein the workpiece holder (14) is adapted for holding a workpiece W within the bowl-shaped form.

5. Apparatus according to one of claims 1 to 4, **characterized in that**
the moving device (21, 70) is adapted for moving the workpiece holding devices (10, 11) within a plane between the charging/discharging positions and the processing positions.

6. Apparatus according to claim 5, **characterized in that**
the moving device (21, 70) comprises a rotating holder (21) with one holding device (22, 23) per workpiece holding device (10, 11).

7. Apparatus according to one of claims 2 to 6, **characterized in that**
the seal (13) is arranged at the edge of the base plate (12) for cooperating with the edge of the charging/discharging opening (3; 3a, 3b).

8. Apparatus according to one of claims 1 to 7, **characterized**
**in that** the inner space of the workpiece locking device (30), which can be selectively evacuated or can admit normal pressure, comprises a first volume,
**in that** the vacuum chamber (1) comprises inner spacer (2) with second volume, which second volume is larger than the first volume by a first factor and the vacuum chamber (1) being adapted such that, during operation, there is a first pressure in the inner space (2), and
**in that** the workpiece locking device (30) is adapted to be selectively evacuated to a second pressure, which is higher than the first pressure by a second factor, which second factor is smaller than the first factor.

## Revendications

1. Dispositif pour l'usinage d'une pièce à oeuvrer au moyen d'un faisceau électronique, comportant
au moins un canon à faisceau électronique (40), et
un dispositif d'alimentation en pièces à oeuvrer qui est pourvu d'une chambre à vide (1) qui présente au moins un raccord (9) pour chaque canon à faisceau électronique (40) et au moins une ouverture de chargement/déchargement (3 ; 3 a, 3b),
au moins deux dispositifs porte-pièces (10, 11),
un dispositif de déplacement (20, 51, 61) pour déplacer chacun des dispositifs porte-pièces (10, 11) vers une position de chargement/déchargement correspondante au niveau de ladite au moins une ouverture de chargement/déchargement (3 ; 3a, 3b) et vers une position d'usinage au niveau dudit au moins un raccord (9) pour le canon à faisceau électronique (40), et
un dispositif respectif (30) formant sas à pièces au niveau de chaque ouverture de chargement/déchargement (3 ; 3a, 3b) qui est susceptible d'être sélectivement évacué ou alimenté en pression normale et qui présente une ouverture de sas refermable,
dans lequel les dispositifs porte-pièces (10, 11) et le dispositif de déplacement (20, 51, 61) sont agencés dans la chambre à vide (1),
dans lequel les dispositifs porte-pièces (10, 11) sont réalisés pour la fermeture étanche à la pression de l'ouverture de chargement/déchargement (3 ; 3a, 3b) et sont susceptibles d'être déplacés sélectivement dans une position de fermeture par le dispositif de déplacement (20, 51, 61),
dans lequel chacun des dispositifs porte-pièces (10, 11) comprend une plaque de base (12) et un porte-pièce (14),
dans lequel un joint (13) est agencé sur chaque dispositif porte-pièce ou au niveau de chaque ouverture de chargement/déchargement,
dans lequel chacun des dispositifs porte-pièces est réalisé pour étancher une chambre d'usinage dans la position d'usinage, qui est délimitée par le raccord (9) pour le canon à faisceau électronique (40), par le canon à faisceau électrique (40) et par le dispositif porte-pièce (11), et
dans lequel le dispositif de déplacement comprend un dispositif de levage (51, 61) pour soulever et abaisser les dispositifs porte-pièces dans la ou les position(s) de chargement/déchargement et dans la ou les position(s) d'usinage, de telle sorte que lors du soulèvement les dispositifs porte-pièces sont soulevés hors d'un élément de maintien (21) du dispositif de déplacement et lors de l'abaissement ils sont posés dans l'élément de maintien (21) du dispositif de déplacement.

2. Dispositif selon la revendication 1, **caractérisé en ce que** le joint au niveau de l'ouverture de chargement/déchargement (3 ; 3a, 3b) est agencé pour coopérer avec le bord de la plaque de base.

3. Dispositif selon la revendication 1 ou 2, **caractérisé en ce que** le dispositif porte-pièce comprend un talon (15) sur le côté tourné vers le dispositif de levage, qui est susceptible d'être amené en engagement avec le dispositif de levage.

4. Dispositif selon la revendication 2 ou 3, **caractérisé en ce que** la plaque de base (12) est réalisée en forme de cuvette, le porte-pièce (14) étant réalisé pour retenir une pièce à oeuvrer W à l'intérieur de la forme en cuvette.

5. Dispositif selon l'une des revendications 1 à 4, **caractérisé en ce que** le dispositif de déplacement (21, 70) est réalisé pour déplacer les dispositifs porte-pièces (10, 11) dans un plan entre les positions de chargement/déchargement et les positions d'usinage.

6. Dispositif selon la revendication 5, **caractérisé en ce que** le dispositif de déplacement (21, 70) comprend une monture tournante (21) pourvue d'un dispositif de maintien respectif (22, 23) pour maintenir un dispositif porte-pièce respectif (10, 11).

7. Dispositif selon l'une des revendications 2 à 6, **caractérisé en ce que** le joint (13) sur le bord de la plaque de base (12) est agencé pour coopérer avec le bord de l'ouverture de chargement/déchargement (3 ; 3a, 3b).

8. Dispositif selon l'une des revendications 1 à 7, **caractérisé en ce que** l'espace intérieur du dispositif formant sas (30) qui est susceptible d'être sélectivement évacué ou alimenté en pression normale présente un premier volume,
**en ce que** la chambre à vide (1) possède un espace intérieur (2) présentant un second volume, le premier volume étant supérieur d'un premier facteur au second volume, et la chambre à vide (1) étant adaptée à ce qu'une première pression règne dans l'espace intérieur (2) pendant le fonctionnement, et
**en ce que** le dispositif formant sas (30) est adapté à être évacué sélectivement à une seconde pression qui est supérieure d'un second facteur à la première pression, le second facteur étant inférieur au premier facteur.
